# EUROPEAN PATENT SPECIFICATION

(11) **EP 0 942 424 B1**
(45) Date of publication and mention of the grant of the patent: **21.10.2009**
(21) Application number: 99301893.6
(22) Date of filing: 12.03.1999
(51) Int. Cl.: G11B 23/50, G11B 5/41

(54) **Head cleaner for linear tape that also functions as a head protector during cleaning tape operations**
Kopfreiniger für ein Linearband welches auch eine Schutzfunktion wärhrend des Reinigungsprozesses hat
Nettoyage de têtes pour une bande linéaire qui fonctionne égallement comme protection de la tête durant l'opération de nettoyage

(30) Priority: 13.03.1998 US 42323; 06.11.1998 US 187650
(43) Date of publication of application: 15.09.1999
(73) Proprietor: Hewlett-Packard Company (a Delaware Corporation), Palo Alto CA 94304 (US)
(72) Inventor: Anderson, James C., Eagle, Idaho 83616 (US); Bloomquist, Darrel R., Meridian, Idaho 83642 (US)
(74) Representative: Marsh, David John

(56) References cited:
- EP-A- 0 800 162
- US-A- 2 905 767
- US-A- 3 731 289
- US-A- 4 412 263
- PATENT ABSTRACTS OF JAPAN vol. 007, no. 146 (P-206), 25 June 1983 (1983-06-25) -& JP 58 057619 A (MATSUSHITA DENKI SANGYO KK), 5 April 1983 (1983-04-05)
- PATENT ABSTRACTS OF JAPAN vol. 002, no. 070 (E-036), 26 May 1978 (1978-05-26) -& JP 53 035517 A (NEC CORP), 3 April 1978 (1978-04-03)
- PATENT ABSTRACTS OF JAPAN vol. 009, no. 239 (P-391), 25 September 1985 (1985-09-25) & JP 60 093614 A (MATSUSHITA DENKI SANGYO KK), 25 May 1985 (1985-05-25)

## Description

### FIELD OF THE INVENTION

This invention relates generally to head cleaning apparatus for tape drives.

### BACKGROUND OF THE INVENTION

Recording/playback systems for magnetic medium are subject to degradation during use as a result of the accumulation of debris which occurs on the magnetic transducer head(s) of such systems. Transducer heads include magnetic read/write heads and associated read/write elements. Hence, a need exists to periodically clean magnetic transducer head(s). Accordingly, several different techniques have been developed for cleaning a magnetic transducer head as discussed below. However, each technique still has shortcomings that require further improvements.

One prior art technique utilizes a separate, dedicated "cleaning cartridge" to perform periodic cleaning of the recording transducer. A "cleaning cartridge" contains a supply of unrecorded abrasive tape that is used to clean one or more magnetic transducer heads. For example, the recording heads found on a tape drive can be cleaned with a "cleaning cartridge". In order to utilize a "cleaning cartridge", the recording/playback of the medium must be stopped, with the data cartridge being removed, and the cleaning cartridge being inserted. The "cleaning cartridge" is then run within the record/playback system so as to clean the recording transducer. Once cleaning is complete, the "cleaning cartridge" is removed, and a data cartridge is reinserted. However, after the "cleaning cartridge" has been used, a new data cartridge may be loaded into the system in order to evaluate the performance of the magnetic transducer head so as to confirm that cleaning has been successfully completed.

Where the magnetic recording/playback system is a tape recording/playback system, the cleaning cartridge includes an abrasive cleaning tape that can cause excessive tape head wear. The abrasiveness of the cleaning tape can be adjusted in order to tailor its effectiveness. If the cleaning tape is made sufficiently effective to thoroughly remove debris from the read/write heads, then the cleaning tape should only be used when it is necessary; otherwise, excessive head wear will result. Such a problem can occur where a piece of abrasive cleaning tape is provided as a leader on a data tape cartridge such that each time a tape is used the leader is used to clean a read/write head. Furthermore, the provision of an abrasive tape leader within a data tape cartridge eventually results in degradation of the abrasive leader from debris accumulating on the cleaning tape. If the abrasive cleaning tape is made sufficiently effective to thoroughly remove debris from a magnetic head, then a routine must be established to limit use of the cleaning tape only when it is necessary. However, sufficient cleaning may not be realized.

Where magnetic tape is used to store computer data, the presence of errors represents a significant problem even if the errors occur infrequently. In certain applications, the loss of data requires that a user be able to perform a cleaning operation in response to recognized drop-out errors, but does not immediately prevent use of the equipment prior to cleaning. In some cases, the loss of a single bit of computer data can be of significant importance, and recovery from such an error must be done in a manner that ensures error-free data storage and retrieval. While error correction is possible via error correction algorithms, data loss can still present problems to a user.

One form of magnetic storage comprises existing linear and helical scan tape drives that are used for storage and retrieval of computer data. Such tape drives can use a single reel in the form of a magnetic tape cartridge to house the magnetic tape media. A special leader or leader block is attached to the magnetic tape media at one end which enables the tape drive to extract the magnetic tape from the magnetic tape cartridge.

"Tape recorder" is intended to refer to one form of magnetic recording/playback system comprising magnetic tape transcription equipment. Such equipment is understood to include standard tape recorders having fixed or movable heads, as well as arcuate scan and helical scan transcription equipment as is typically used in analog and digital tape recorders. According to one implementation, a linear transcription head is employed, although such invention has application in other tape recording environments. As described here, "transcription" is intended to mean read and/or write operations that are performed with a tape recorder, and is not intended to be limited to a particular use or format for data.

Another prior art technique is found on a typical helical scan tape drive wherein a head cleaning device is built into a mechanism of the tape drive. More particularly, a helical scan tape drive forms a recording method that is used on videotape and digital audio tape (DAT) that runs the tracks diagonally from top to bottom in order to increase the storage capacity. A drum containing read/write heads is used to read/write information in diagonal segments from/onto a segment of magnetic tape. A head cleaner is located on an opposite side of the drum than the tape. In this manner, while data is being written/read, the head cleaner can be concurrently cleaning the heads as they pass by on the drum.

In contrast, a linear tape drive continuously presents a magnetic tape segment in contact with the read/write heads, unless the tape is removed from the tape drive. Hence, linear tape drives typically do not have head cleaners built into the tape drive mechanism. Therefore, a data tape is typically removed when it is determined that the heads have become dirty in order that a cleaning tape cartridge can be loaded into the tape drive to clean debris from the heads. However, such loading/unloading is undesirable because it takes customer intervention and a significant amount of time to spool the tape back into the cartridge. Accordingly, such loading/unloading is slow, cumbersome and is extremely difficult to implement automatically.

One linear tape drive which does have a head cleaner built into the tape drive mechanism is the International Business Machines (IBM) Magstar 3590, sold by IBM Storage Systems Division, 9000 S. Rita Road, Tucson, Arizona 85744. The IBM Magstar 3590 has a cleaning brush built into the tape drive mechanism such that the cleaning brush is brought into contact with the read/write heads during a tape threading operation. More particularly, as a leader block on a data tape is pulled back into the tape cartridge, the leader block hits a lever which engages the brush against the read/write heads. An actuator moves the heads up and down in order to provide scrubbing action between the brush and heads. However, such cleaning action only takes place after the data tape has been retracted into the data cartridge. Furthermore, it takes time to spool the tape back into the cartridge which causes delay, even before actual brush-to-head cleaning action actually occurs.

It is therefore desirable to employ an improved tape drive cleaning mechanism that is capable of sufficiently cleaning a magnetic head of the system without imparting any significant delay in operation resulting from unwinding a data tape back into a data cartridge before cleaning can begin.

It is further desirable to deliver such cleaning action without having to remove a data tape from a tape drive. Furthermore, there is a desire to deliver cleaning to a head at periodic intervals that substantially coincide with a need to clean debris from a magnetic head.

US 3,731,289 discloses a tape drive comprising a transducer head, a tape carrier, a cleaning ribbon displacement structure, a cleaning device and an actuator. The tape carrier is configured to move a tape along a tape travel path. The tape carrier moves the tape in contact with the transducer head during at least one of a read operation and a write operation. The cleaning device comprises a cleaning ribbon mounted in the cleaning ribbon displacement structure. The cleaning ribbon runs transverse to the tape travel path. The actuator is configured to move the cleaning ribbon displacement structure parallel to the tape travel path between an inoperative position and an operative position in which the cleaning ribbon is brought into contact with the transducer head. JP 580576619 also provides means for cleaning a magnetic tape head without removing the tape from the device. A tape shifter is provided which shifts the magnetic tape out of a cylinder and which contains a cleaning member that contacts the magnetic heads.

### SUMMARY OF THE INVENTION

The invention provides a tape drive as claimed in claim 1.

The invention also includes a method 8.

### DESCRIPTION OF THE DRAWINGS

Embodiments of the invention are described below with reference to the following accompanying drawings:
Fig. 1 is a perspective view of a computer system including a linear tape drive data storage device embodying the invention ;
Fig. 2 is a simplified partial perspective view of an inside of a linear tape drive in which a data tape cartridge is received, and showing the cleaning device of this invention provided in association with the tape drive mechanism of the tape drive ;
Fig. 3 is a plan view of the tape drive and data cartridge depicted in Fig. 2 ;
Fig. 4 is an enlarged and simplified partial perspective view of the cleaning device depicted in Fig. 2 during a cleaning operation ; and
Fig. 5 is a logic flow diagram illustrating the steps employed in protecting a transducer head from unnecessary abrasive wear/contamination from abrasive cleaning tape and/or cleaning a transducer head.

### DETAILED DESCRIPTION OF THE INVENTION

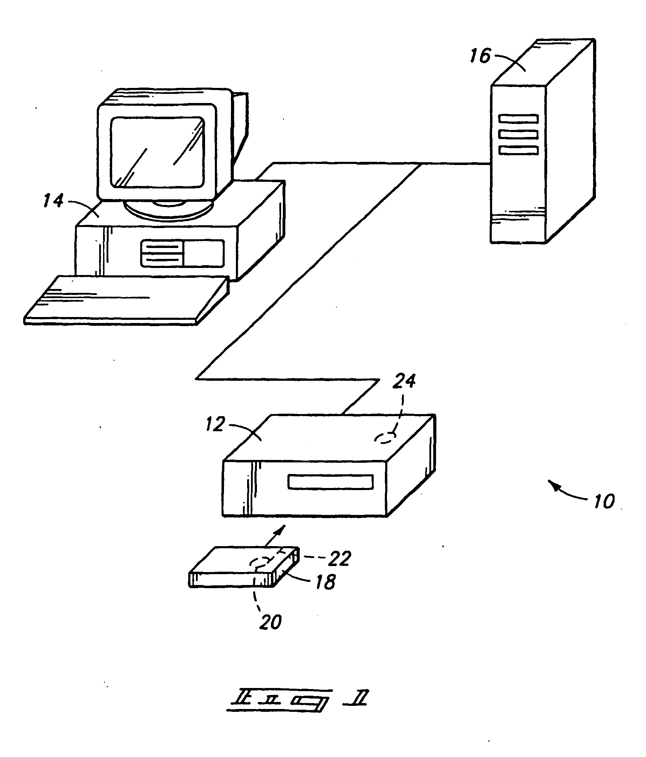

Figure 1 illustrates a computer network environment 10 including a data storage device, or system, 12 and including a computer 14 and a network server 16. Computer 14 is configured to read data from and write data to data storage device 12. Additionally or optionally, server 16 is configured to read data from and write data to data storage device 12. Computer 14 and network server 16, together or individually, form a host system that is connected with data storage device 12. According to one embodiment, data storage device 12 comprises a data storage/retrieval device configured in the form of a stand-alone computer linear tape drive. According to another embodiment, data storage device 12 is supported in a bay inside a housing of computer 14 or server 16.

As illustrated in Figure 1, data storage device 12 is a linear recording tape drive. Although the one embodiment illustrated in Figure 1 is employed in a computer data storing tape drive system, the invention is understood to have a wide variety of applications. For example, certain aspects of the invention can be used in connection with other magnetic storage media, for storing either analog or digital information. Some aspects of the invention can be employed, for example, in connection with any of a variety of types of storage devices having read/write heads, including linear, helical and serpentine tape drives. For purposes of illustration, the invention will be described in connection with a computer linear tape drive.

As shown in Figure 1, tape drive 12 is configured to be used with tape cartridges such as a data cartridge 18. In the illustrated embodiment, data cartridge 18 is a single-reel type linear tape cartridge. Such tape data cartridge 18 includes a tape carrier in the form of a reel 20, with tape 22 wound onto reel 20. A second reel 24 is included in tape drive 12, and is configured to engage tape 22. Second reel 24 cooperates with first reel 20 to form a tape carrier. According to an alternative construction, data tape cartridge 18 includes two reels. According to one implementation, tape 22 is configured with a width, W, of 12-7mm (one-half inch). Such tape 22 has a length extending in a direction perpendicular to width W, with a plurality of parallel tracks being defined across the width of tape 22. Such tracks extend in the direction of the length of tape 22, and are used for storing data as well as storing servo information.

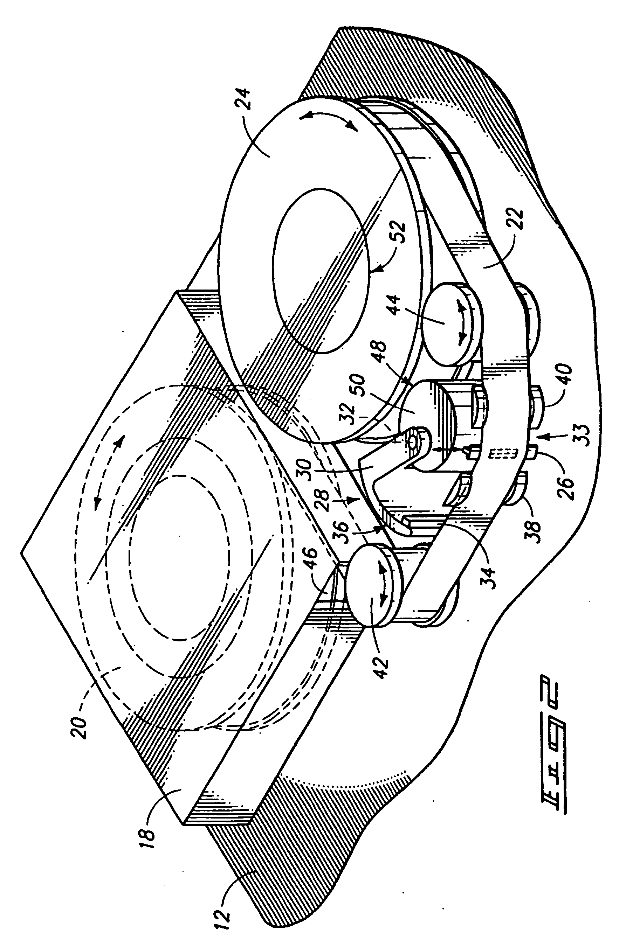

Figure 2 illustrates the internal operating configuration of tape drive 12 when data cartridge 18 is loaded therein so as to position data tape 22 for linear movement along a magnetic tape head 26. As shown in Figure 2, computer tape drive 12 includes magnetic tape head 26 which contains a plurality of read/write elements for reading data from or writing data to tape 22 of cartridge 18. Magnetic tape head 26 comprises a transducer head. Additionally, a plurality of servo elements are configured on head 26 for reading servo code from tape 22. Additionally, such servo elements on the tape head are configured for reading servo information as well as data from a portion of tape 22. The performance of individual transducer heads can be tested by writing and reading data from tape 22 in order to verify that head cleaning is required, or that head 26 has been sufficiently cleaned.

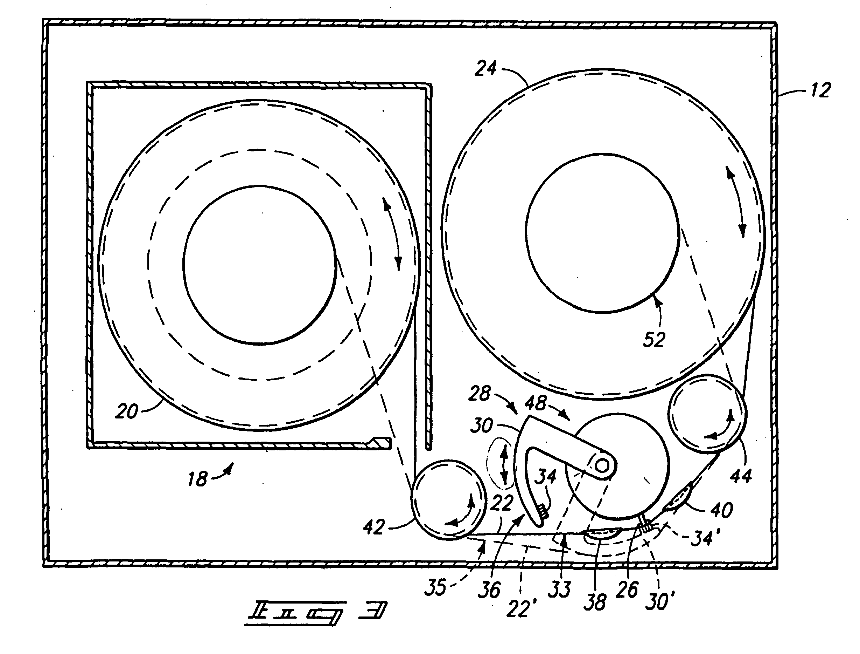

Figure 2 illustrates a head cleaning device 28 configured in one form to include a support structure in the form of a pivotally supported arm 30, carried for movement about a pivot axis 32, and positioned to displace tape 22 from a travel position, or travel path, 33 along head 26. More particularly, arm 30 supports a cleaning apparatus in the form of a cleaning brush 34 along an inner surface at a location wherein pivotal movement of arm 30 positions brush 34 directly against and into engagement with head 26. Optionally, a cleaning pad or surface can be substituted for brush 34. A radial outer slider surface 36 on arm 30 slides and mates with tape 22 so as to displace tape 22 from a natural operating travel position or path 33 against head 26 to a retracted position 35 (see Fig. 3). According to the one construction, support surface 36 forms a cylindrical segment centered about pivot axis 32, as shown in further detail in Figure 3, configured to slidably engage tape 22.

Arm 30 facilitates retraction of tape 22 from travel position 33 so as to urge tape 22 away from transducer head 26. The arm 30 is moved in an oscillating manner such that brush 34 engages transducer head 26 to impart cleaning there along, in combination with transducer head 26 being driven in oscillation in a substantially transverse, or perpendicular, direction. The arm 30 is pivoted into position so that slider surface 36 biases tape 22 away from travel position 33 such that tape 22 is separated from transducer head 26 while tape 22 is transported between reels 20 and 24. This enables arm 30 to form a shield that protects transducer head 26 from unnecessary contact with abrasive cleaning media provided on cleaning tape segments of tape 22 when spooling such cleaning tape segments from one reel 22 to another reel 24, and vice versa.

As shown in Figure 2, tape 22 exits data cartridge 18 along an exit aperture 46 where tape 22 travels around roller guides 42 and 44, as well as stationary guides 38 and 40. Transducer head 26 is positioned between stationary guides 38 and 40 such that tape tension is applied to tape 22 across transducer head 26 during normal operation of tape drive 12.

As shown in Figure 2, head cleaning device 28 is formed from a support arm 30 that is carried for pivotal movement about pivot axis 32 such that tape 22 can be displaced from a travel position 33 to a retracted position 35 (see Fig. 3). Cleaning brush 34 is provided along a radial inner surface of arm 30 at a location such that pivotal movement of arm 30 imparts displacement to tape 22 as radial outer support surface 36 provides a tape displacement structure that biases tape 22 outwardly and away from head 26. Support surface 36 slides behind tape 22, causing tape 22 to be biased apart from transducer head 26. Such biasing enables room for cleaning brush 34 to be brought into contact with head 26 during a cleaning operation as described in further detail below. Accordingly, brush 34 is pivotally positioned by arm 30 for placement directly in contact with head 26. Brush 34 is positioned along head 26 while head 26 is actuated by a motor (not shown) for up-and-down movement, transverse to the travel direction of tape 22, while arm 30 is oscillated in a direction generally parallel to the tape travel path 33.
Accordingly, dual cleaning action is imparted between brush 34 and head 26.

It has been discovered that cleaning brush 34 may be ineffective at cleaning transducer head 26 when head 26 is only moved up and down, since bristles on brush 34 can separate down the length of head 26 such that gaps are provided where little or no effective cleaning is imparted therebetween. Such dual cleaning action is provided to more thoroughly ensure cleaning of transducer head 26 in that it has been found that a typical cleaning brush can result in ineffective cleaning with a single-action movement of a transducer head. For example, the bristles of brush 34 can be caused to bias in opposed directions, leaving cleaning gaps along transducer head 26 as such head 26 is moved transversely to travel path 33. The dual cleaning action of Applicant's technique corrects such problem by moving the brush back and forth in a direction perpendicular to the direction of motion of the actuator for head 26. Such dual action causes new bristle ends to be presented constantly to the head surfaces of transducer head 26, thus improving the cleaning action of brush 34. The same holds for other (head) cleaning apparatus such as cleaning pads. More particularly, such motion can be obtained by driving a drive motor (not shown) for arm 30 in an oscillating, forward-then-reverse motion, repeated many times, while a linear actuator 48 moves transducer head 26 up and down.

According to one construction, cleaning brush 34 is formed from a statically dissipative, slightly conductive bristle material. One such bristle material comprises a reasonably conductive, coated and soft nylon brush, or any conductive synthetic fiber. Alternatively, a conductive carbon material can be utilized to form such cleaning brush. Further alternatively, stainless steel can be utilized to form cleaning brush 34. According to one implementation, cleaning brush 34 is oscillated one to ten times per second while engaged with transducer head 26. Likewise, arm 30 is concurrently oscillated 0.1 to two times per second such that brush 34 is agitated against head 26. Such dual action is carried out with sufficient duration to ensure cleaning of head 26.

As shown in Figure 2, it is understood that head cleaning device 28 is moved into position so as to provide a tape displacement structure that biases tape 22 away from transducer head 26. Additionally, brush 34 is positioned against head 26 to impart cleaning action there along. However, it is also understood that other cleaning apparatus such as a cleaning pad can be mounted to a tape displacement structure in order to impart cleaning to a transducer head. Furthermore, it is understood that a tape displacement structure can be provided for biasing the tape away from the transducer head, while a separate cleaning device is brought into contact with the head for imparting cleaning action there along. Irrespective of the structural implementation, a first important concept related to this invention is directed to the movement of tape 22 away from head 26 while cleaning is imparted to head 26 by a cleaning structure such as head cleaning device 28, while tape 22 remains loaded into tape drive 12. Hence, there is no need to unload tape 22 and data cartridge 18 from tape drive 12 during a cleaning operation.

According to Figure 2, magnetic tape head 26 is shown supported for up-and-down movement by a linear actuator 48. Actuator 48 is shown in simplified form as a cylindrical body in Figure 2, with an actuator housing 50 providing a pivotal support structure for arm 30. It is understood that actuator 48 can be formed from any of a number of constructions presently understood in the art, wherein a linear-magnet displacement member, or any linear displacement member, enables movement of head 26 transverse to the travel direction of tape 22 such that read/write head sensing elements on head 26 can be properly positioned onto tracks of information contained on tape 22. Actuator 48 is also implemented to position read/write head elements of head 26 along tape 22 during normal tape drive operation.

According to the implementation depicted in Figure 2, actuator 48 is used to impart up-and-down movement of head 26 while it is engaged with brush 34 so as to provide scrubbing action therebetween. Such scrubbing, or cleaning, action can be imparted without spooling the tape back into cartridge 18, so it is much faster than prior art methods described previously.

It will be understood that the movement of head cleaning device 28 is such that it functions as a tape displacement structure that biases tape 22 away from transducer head 26. Such biasing prevents unnecessary wear caused by contact of abrasive cleaning tape segments, on tape 22, with transducer head 26. The slider surface 36 forms a tape displacement structure that is provided in association with transducer head, or tape head, 26 to engage and bias a received tape 22 from tape travel path 33 to retracted path 35. Retracted path 35 is spaced apart from transducer head 26. A tape carrier, provided by reels 20 and 24, is operative to move the retracted tape 22 across tape displacement structure 36 while such tape is spaced apart from head 26. Such spaced-apart separation prevents transducer wear and/or transducer contamination which might otherwise result from contact of tape 22 moving against head 26.

Most tape drives 12 have cleaning cartridges containing special abrasive media that is used to clean the tape head and tape guides of the tape mechanism. Typically, such cleaning media is slightly abrasive in order to provide necessary cleaning characteristics. For the case of products that have a pair of reels built into a cartridge, such cleaning media is only used once in order to prevent contamination from used media getting onto a transducer head. This can be realized by preventing the media from being rewound completely back onto a first reel. By rewinding such media back onto a first reel, such media is passed over the head which results in abrasive wear and/or contamination from the used media containing undesirable contaminants thereon.

For the case of a single-reel cartridge, such implementation is not possible since the only way that cleaning media can be accessed is to spool such media through the head mechanisms and over the transducer head (such as transducer head 26 of Fig. 2). However, one potential problem results in that used cleaning media can contaminate head 26. Another problem results in that spooling of cleaning tape, containing cleaning media, from one reel 20 to another reel 24 (of Fig. 2) has the potential to cause excessive wear to head 26 due to the abrasive nature of such media.

Accordingly, another aspect of the invention is to provide a protective shield on a head cleaning brush assembly, such as slider surface 36 on head cleaning device 28. One possible configuration is depicted in Figures 2-4. Accordingly, head cleaning device 28 comprises a head cleaning brush 34 that provides a shield via slider surface 36. Slider surface 36 can be positioned to bias tape 22 away from head 26 while spooling such tape 22 between reels 20 and 24. Accordingly, such biasing is preferably imparted when a cleaning tape segment is being passed over head 26, but not during a cleaning operation. Accordingly, a reduction can be made in the amount of wear that is imparted between a cleaning tape segment of tape 22 and head 26. Hence, tape 22 is only presented in contact with head 26 when it is desirable to pass a segment of cleaning tape against head 26 during a cleaning operation. Accordingly, contaminated cleaning tape sections are prevented from contacting head 26 by carefully monitoring usage of such cleaning tape section. A contaminated section of cleaning tape is then prevented from contacting head 26 via rotatable positioning of arm 30 and slider surface 36 so as to bias tape 22 away from head 26.

By pushing tape 22 away from head 26, access is also provided for cleaning magnetic tape head 26 via brush 34. By engaging a head-cleaning arm comprising a cleaning device 28 in communication with head 26, cleaning media of tape 22 can be spooled from one reel 20 to another reel 24 and vice versa without contacting head 26. Such action eliminates any unnecessary damage or contamination that the cleaning media of tape 22 could otherwise cause to head 26.

Although head cleaning device 28 is shown configured with an integrally formed slider surface 36 and a brush 34, it is to be understood that other types of linkages can be used to move tape 22 away from head 26. For example, a four-bar kinematic linkage, or a slider cam mechanism, can be used to impart retracted motion of tape 22 from head 26.

In order to retract or bias tape 22 and position brush 34 for cleaning action against head 26, arm 30 is powered for pivotal movement between the retracted position for arm 30 (shown in Fig. 3), and a tape-biasing position illustrated as arm 30' (in Fig. 3). One technique to power arm 30 for pivotal movement is to drive arm 30 with an existing motor that is provided within tape drive 12. For example, a tape cartridge load motor can be used to drive a cam that engages a cleaning arm after tape cartridge 18 is loaded into tape drive 12, and further imparts desired oscillating motion between brush 34 and head 26. Alternatively, other separate or dedicated motors can be utilized to pivotally move arm 30 between arm positions 30 and 30', as shown in Figure 3.

It is understood that the head cleaning device 28 is capable of moving tape 22 away from head 26 to reduce head wear and contamination during tape spooling operations and is able to clean transducer head 26 while tape 22 is moved away from head 26 without requiring the unloading of tape 22 from tape drive 12, or retraction of tape 22 into tape cartridge 18. Accordingly, cleaning can be imparted to head 26 without having to spool a tape back into its cartridge.

As shown in Figure 3, tape 22 is supported by a tape carrier comprising reel 20 and reel 24, extending between data cartridge 18 and the support structure mechanisms of tape drive 12. Furthermore, roller guides 42, 44 and stationary guides 38, 40 cooperate to deliver tape 22 along a travel position 33 situated directly against tape head 26. Alternatively, any comparable tape travel path can be provided. Pivotal movement of arm 30 causes slider surface 36 to bias tape 22 into a retracted position 35 illustrated by tape 22'. The pivotal positioning of arm 30 into the positioning of arm 30' retracts tape 22 from head 26 such that brush 34' is placed into direct contact with head 26 where cleaning action can be imparted by reciprocating, or moving, head 26 up and down via operation of actuator 48 and reciprocating of arm 30'. As shown in Figure 3, actuator 48 is illustrated in one construction as a linear actuator. However, it is understood that any commercially available construction of a linear actuator for moving a head can be used in the alternative.

As shown in Figure 3, it is understood that tape 22 includes leaders (not shown) and a leader block assembly 52 which enables loading and unloading of tape 22 during loading and unloading of data cartridge 18 within tape drive 12. Details of many different types of leader block assemblies are well understood in the art and are not disclosed herein in any further detail as they do not relate to the novel aspects of this invention. One such leader block assembly is disclosed in U.S. Patent Application Serial No. 09/010,418, filed on January 21, 1998, and entitled "Tape Block and Take-up Reel Assembly for a Magnetic Tape Transport System" and published as US6050514. It is understood that any one of a number of commercially available leader block assemblies can be used with a tape drive implementing the features of this invention.

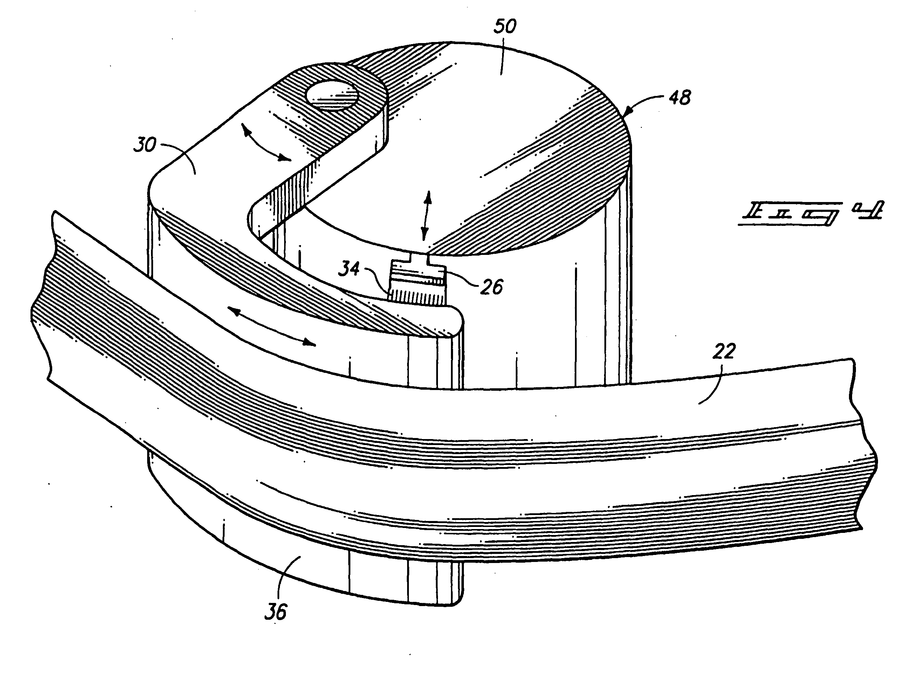

Figure 4 illustrates in greater detail the positioning of arm 30 such that slider surface 36 biases tape 22 in spaced-apart relation from transducer head 26. The tape carrier moves tape 22 in sliding contact with transducer head 26, under normal operation. Such movement occurs during read operations and write operations. However, slider surface 36 acts as a tape displacement structure that biases tape 22 away from head 26 so as to prevent unnecessary wear and/or contamination to reading/writing elements present on head 26. Additionally, the rotatable position of arm 30 and slider surface 36 results in biasing of tape 22 that enables cleaning action between cleaning brush 34 and transducer head 26.

Oscillating or reciprocating motion is imparted to arm 30 by a drive motor (not shown). As shown in Figure 4, arm 30 is carried for pivotal movement by an actuator housing 50. However, it is understood that arm 30 can be carried for movement by any of a number of kinematic linkages sufficient to move slider surface 30 into engagement with tape 22 so as to bias tape 22 away from transducer head 26. For example, where space is limited, an upper and a lower guide track can be used to guide and position a slider surface on a track-guided support member, or arm, to engage and bias a tape away from a transducer head. Similarly, a head cleaning device discussed below can also be track supported. Such a track construction is presently used to guide leader blocks within tape drive systems.

As shown in Figure 4, a cleaning apparatus is provided by brush 34, which is configured to engage transducer head 26 for cleaning when tape 22 is biased from transducer head 26 along a retracted tape travel path. The cleaning device 28 provided with the brush 34 is able to clean the transducer head 26 without removal of tape 22 from a data storage device.

As shown in Figure 4, actuator 48 is configured to support transducer head 26 for movement generally transverse to a tape travel path of tape 22 when the brush 34 is engaged with transducer head 26. As further shown in Figure 4, slider surface 36 forms a tape displacement structure via support arm 30 that is pivotally carried by a tape drive. Such tape displacement structure has a radial outer support surface provided by slider surface 36 that is configured to mate with and to bias tape 22 away from transducer head 26.

As shown in Figure 4, a cleaning brush 34 is provided along a radial inner portion of arm 30. The cleaning brush 34 and transducer head 26 are each supported for movement relative to the other. Cleaning brush 34 is configured to clean transducer head 26 during such relative movement.

In operation, slider surface 36 provides a support surface on arm 30 that is configured to displace tape 22 so as to separate tape 22 from transducer head 26, and enable brush 34 to engage head 26. According to one implementation, transducer head 26 comprises a magnetic read/write head.

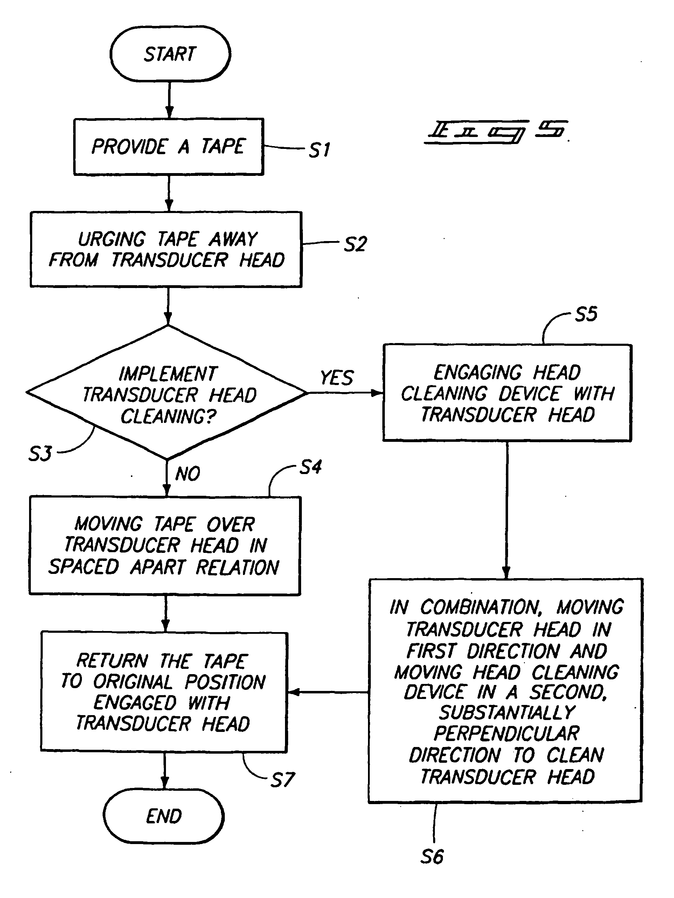

Figure 5 depicts a method of use of the structure depicted in Figures 1-4. Such method can be implemented via a smart cleaning/head protection system and method that are implemented by way of a controller and memory contained within a tape drive system, such as data storage system 12 (of Figs. 1 and 2).

According to the logic flow diagram of Figure 5, a "cleaning/transducer head protection algorithm" is disclosed as a first level logic flow diagram for the programming of a processor, or controller, of a tape drive. The "algorithm" is used to implement protection of a transducer head within a tape drive so as to limit unnecessary abrasive wear against such transducer head when spooling tape having abrasive cleaning tape segments. Furthermore, such algorithm is further used to implement cleaning of a head by biasing a tape away from such head and engaging a cleaning device with the transducer head. In combination, the transducer head and cleaning device are moved in different directions so as to more thoroughly clean the transducer head.

The logic flow diagram of Figure 5 is initiated, followed by Step "S1". According to Step "S1", a tape is provided. After performing Step "S1", the process proceeds to Step "S2".

In Step "S2", the logic flow diagram initiates urging of the tape away from the transducer head by moving the actuator arm so as to engage the slider surface against such tape. After performing Step "S2", the process proceeds to Step "S3".

In Step "S3", a tape drive processor (or optionally, an associated computer or user) determines whether a transducer head requires cleaning. If the transducer head does not require cleaning and abrasive tape segments are being spooled by such transducer head, the process proceeds to Step "S4". If the transducer head requires cleaning, the process proceeds to Step "S5".

In Step "S4", a tape drive processor directs movement of a tape over a transducer head in spaced-apart relation from such head, by action of a slider surface displacing such tape away from such head. After performing Step "S4", the process proceeds to Step "S7".

In Step "S5", a tape head processor engages the head cleaning device with a transducer head. After performing Step "S5", the process proceeds to Step "S6".

In Step "S6", the tape drive processor, in combination, directs movement of the transducer head in a first direction concurrently with movement of a head cleaning device in a second, substantially perpendicular direction in order to clean the transducer head. Once a predetermined amount of cleaning has been imparted to such head, to a level that is determined to be sufficient to clean such head, the process proceeds to Step "S7".

In Step "S7", the tape drive processor directs return of the urged tape to the original position engaged with the transducer head. After performing Step "S7", the process terminates.

It is to be understood that the invention is not limited to the specific features shown and described herein as they fall within the scope of the appended claims.

## Claims

1. A tape drive (12), comprising:
a transducer head (26);
a tape carrier (20, 24) configured to move a data tape (22) along a tape travel path (33) in contact with the transducer head (26) during at least one of a read operation and a write operation;
a tape displacement structure (30, 36) configured to engage and bias said data tape (22) from the tape travel path (33) to a retracted tape travel path (35) spaced apart from the transducer head (26) to enable cleaning of the transducer head without removal of the data tape from the tape drive; and
a cleaning device (28) for cleaning said transducer head (26), **characterised in that** said cleaning device (28) includes a head cleaning apparatus (34) configured to be moved into oscillating engagement with the transducer head (26) along the tape travel path (33) for cleaning the transducer head when the tape (22) is biased to the retracted tape travel path (35); and by
an actuator (48) configured to oscillate the transducer head (26) substantially transverse to the tape travel path (33) when the head cleaning apparatus (34) of the cleaning device (28) is in oscillating engagement with the transducer head (26).

2. The tape drive of claim 1, wherein the tape carrier (20,24) is operative to move the retracted tape (22) across the tape displacement structure (30, 36) to prevent at least one of transducer wear and transducer contamination caused by contact of the tape (22) moving against the transducer head (26).

3. The tape drive of claim 1, wherein the tape drive is operable to: A) receive a signal indicating whether the transducer head (26) requires cleaning or B) determine whether the transducer head requires cleaning and C) if cleaning is not required move the tape past the transducer head along said retracted tape travel path to prevent at least one of transducer wear and transducer contamination caused by contact of the tape (22) moving against the transducer head and D) if cleaning is required causing said oscillating movements of the transducer head and head cleaning apparatus (34) to clean the transducer head.

4. The tape drive of claim 1, 2 or 3, wherein the tape displacement structure (30, 36) comprises a support structure (30) carried by the tape drive (12) and having an outer support surface (36) configured to engage and bias a tape (22).

5. The tape drive of claim 4, wherein the head cleaning apparatus (34) of the head cleaning device (28) is supported on the support structure (30).

6. The tape drive of any preceding claim, wherein the head cleaning apparatus of the head cleaning device (28) comprises a cleaning brush (34).

7. The tape drive of any preceding claim, wherein the transducer head (26) comprises a magnetic read/write head.

8. A method of cleaning a linear tape drive (12) comprising the steps of:
providing a tape (22) and a tape carrier (20, 24) for moving the tape (22) within the tape drive (12), the tape supported for movement over the transducer head (26) along a tape travel path (33);
urging the tape (22) away from the transducer head (26) by pivoting a tape displacement structure (30, 36) into engagement with the tape (22) to retract the tape (22) into a retracted tape travel path (35);
moving a head cleaning apparatus (34) of a cleaning device (28) into engagement with the transducer head (26) and causing cleaning of the transducer head by oscillating the head cleaning apparatus along the direction of the tape travel path (33) and oscillating the transducer head (26) substantially transverse to the tape travel path (33) to impart cleaning to the transducer head (26).

9. The method of claim 8, wherein the tape (22) includes at least one abrasive cleaning tape section and further comprising in combination with urging the tape (22) away from the transducer head (26) moving the or at least one cleaning tape section past the transducer head (26) along said retracted path so as to prevent at least one of:
A) abrasive wear of the transducer head (26); and
B) contamination of the transducer head (26) with debris deposited from the abrasive cleaning tape section.

10. The method of claim 8, wherein the tape (22) includes at least one abrasive cleaning tape section and further comprising A) receiving a signal indicating whether the transducer head (26) requires cleaning or B) determining within said tape drive whether the transducer head requires cleaning and C) if the transducer head requires cleaning, causing said oscillating movement of the transducer head and head cleaning apparatus and D) if cleaning is not required, moving the or a said abrasive cleaning tape section past the transducer head along said retracted tape travel path.

11. The method of claim 8, 9 or 10, wherein the head cleaning apparatus of the cleaning device (28) comprises a cleaning brush (34).

## Patentansprüche

1. Ein Bandlaufwerk (12), das folgende Merkmale aufweist:
einen Wandlerkopf (26);
einen Bandträger (20, 24), der konfiguriert ist, um während zumindest einer Leseoperation und/oder einer Schreiboperation ein Datenband (22) entlang einem Bandbewegungsweg (33) in Kontakt mit dem Wandlerkopf (26) zu bewegen;
eine Bandverlagerungsstruktur (30, 36), die konfiguriert ist, um das Datenband (22) in Eingriff zu nehmen und von dem Bandbewegungsweg (33) zu einem zurückgezogenen Bandbewegungsweg (35) vorzuspannen, der von dem Wandlerkopf (26) beabstandet ist, um ein Reinigen des Wandlerkopfs ohne eine Entfernung des Datenbands aus dem Bandlaufwerk zu ermöglichen; und
ein Reinigungsgerät (28) zum Reinigen des Wandlerkopfs (26), **dadurch gekennzeichnet, dass** das Reinigungsgerät (28) eine Kopfreinigungsvorrichtung (34) umfasst, die konfiguriert ist, um zum Reinigen des Wandlerkopfs in eine Oszillationsineingriffnahme mit dem Wandlerkopf (26) entlang dem Bandbewegungsweg (33) bewegt zu werden, wenn das Band (22) zu dem zurückgezogenen Bandbewegungsweg (35) vorgespannt ist; und durch
einen Betätiger (48), der konfiguriert ist, um den Wandlerkopf (26) im Wesentlichen quer zu dem Bandbewegungsweg (33) in Oszillation zu versetzen, wenn die Kopfreinigungsvorrichtung (34) des Reinigungsgeräts (28) sich in einer Oszillationsineingriffnahme mit dem Wandlerkopf (26) befindet.

2. Das Bandlaufwerk gemäß Anspruch 1, bei dem der Bandträger (20, 24) wirksam ist, um das zurückgezogene Band (22) über die Bandverlagerungsstruktur (30, 36) zu bewegen, um zumindest eine Wandlerabnutzung und/oder eine Wandlerverunreinigung zu verhindern, die durch einen Kontakt des Bands (22), das sich gegen den Wandlerkopf (26) bewegt, bewirkt wird.

3. Das Bandlaufwerk gemäß Anspruch 1, wobei der Bandantrieb wirksam ist, um: A) ein Signal zu empfangen, das angibt, ob der Wandlerkopf (26) eine Reinigung benötigt, oder B) zu bestimmen, ob der Wandlerkopf eine Reinigung benötigt, und, C) falls kein Reinigen erforderlich ist, das Band entlang dem zurückgezogenen Bandbewegungsweg an dem Wandlerkopf vorbei zu bewegen, um zumindest eine Wandlerabnutzung und/oder eine Wandlerverunreinigung zu verhindern, die durch einen Kontakt des Bands (22) bewirkt wird, das sich gegen den Wandlerkopf bewegt, und, D) falls eine Reinigung erforderlich ist, die Oszillationsbewegungen des Wandlerkopfs und der Kopfreinigungsvorrichtung (34) zu bewirken, um den Wandlerkopf zu reinigen.

4. Das Bandlaufwerk gemäß Anspruch 1, 2 oder 3, bei dem die Bandverlagerungsstruktur (30, 36) eine Trägerstruktur (30) aufweist, die durch das Bandlaufwerk (12) getragen ist und eine äußere Trägeroberfläche (36) aufweist, die konfiguriert ist, um das Band (22) in Eingriff zu nehmen und vorzuspannen.

5. Das Bandlaufwerk gemäß Anspruch 4, bei dem die Kopfreinigungsvorrichtung (34) des Kopfreinigungsgeräts (28) an der Trägerstruktur (30) getragen ist.

6. Das Bandlaufwerk gemäß einem der vorhergehenden Ansprüche, bei dem die Kopfreinigungsvorrichtung des Kopfreinigungsgeräts (28) eine Reinigungsbürste (34) aufweist.

7. Das Bandlaufwerk gemäß einem der vorhergehenden Ansprüche, bei dem der Wandlerkopf (26) einen Magnet-Lese/Schreib-Kopf aufweist.

8. Ein Verfahren zum Reinigen eines Linearbandlaufwerks (12), das folgende Schritte aufweist:
Bereitstellen eines Bands (22) und eines Bandträgers (20, 24) zum Bewegen des Bands (22) innerhalb des Bandantriebs (12), wobei das Band für eine Bewegung über den Wandlerkopf (26) entlang einem Bandbewegungsweg (33) getragen ist;
Zwingen des Bands (22) weg von dem Wandlerkopf (26) durch ein Schwenken einer Bandverlagerungsstruktur (30, 36) in einen Eingriff mit dem Band (22), um das Band (22) in einen zurückgezogenen Bandbewegungsweg (35) zurückzuziehen;
Bewegen einer Bandreinigungsvorrichtung (34) eines Reinigungsgeräts (28) in einen Eingriff mit dem Wandlerkopf (26) und Bewirken einer Reinigung des Wandlerkopfs durch ein Versetzen der Kopfreinigungsvorrichtung in Oszillation entlang der Richtung des Bandbewegungswegs (33) und Versetzen des Wandlerkopfs (26) in Oszillation im Wesentlichen quer zu dem Bandbewegungsweg (33), um den Wandlerkopf (26) zu reinigen.

9. Das Verfahren gemäß Anspruch 8, bei dem das Band (22) zumindest einen abrasiven Reinigungsbandabschnitt umfasst und ferner in Kombination mit dem Zwingen des Bands (22) weg von dem Wandlerkopf (26) ein Bewegen des oder des zumindest einen Reinigungsbandabschnitts an dem Wandlerkopf (26) vorbei entlang dem zurückgezogenen Weg aufweist, um zumindest eines der Folgenden zu verhindern:
A) eine abrasive Abnutzung des Wandlerkopfs (26); und
B) eine Verunreinigung des Wandlerkopfs (26) mit Partikeln, die von dem abrasiven Reinigungsbandabschnitt abgelagert werden.

10. Das Verfahren gemäß Anspruch 8, bei dem das Band (22) zumindest einen abrasiven Reinigungsbandabschnitt umfasst und ferner ein A) Empfangen eines Signals, das angibt, ob der Wandlerkopf (26) eine Reinigung erfordert, oder B) Bestimmen innerhalb des Bandantriebs, ob der Wandlerkopf eine Reinigung erfordert, und, C) falls der Wandlerkopf eine Reinigung erfordert, Bewirken der Oszillationsbewegung des Wandlerkopfs und der Kopfreinigungsvorrichtung (34), und, D) falls keine Reinigung erforderlich ist, Bewegen des oder des zumindest einen abrasiven Reinigungsbandabschnitts an dem Wandlerkopf vorbei entlang dem zurückgezogenen Bandbewegungsweg aufweist.

11. Das Verfahren gemäß Anspruch 8, 9 oder 10, bei dem die Kopfreinigungsvorrichtung des Reinigungsgeräts (28) eine Reinigungsbürste (34) aufweist.

## Revendications

1. Lecteur de bande magnétique (12), comprenant :
une tête de transducteur (26) ;
un support de bande magnétique (20, 24) configuré pour déplacer une bande magnétique de données (22) le long d'une trajectoire de déplacement de bande magnétique (33) en contact avec la tête de transducteur (26) pendant au moins l'une parmi une opération de lecture et une opération d'écriture ;
une structure de déplacement de bande magnétique (30, 36) configurée pour mettre en prise et solliciter ladite bande magnétique de données (22) de la trajectoire de déplacement de bande magnétique (33) à une trajectoire de déplacement de bande magnétique rétractée (35) espacée de la tête de transducteur (26) pour permettre le nettoyage de la tête de transducteur sans retirer la bande magnétique de données du lecteur de bande magnétique ; et
un dispositif de nettoyage (28) pour nettoyer ladite tête de transducteur (26), **caractérisé en ce que** ledit dispositif de nettoyage (28) comprend un appareil de nettoyage de tête (34) configuré pour être déplacé en mise en prise oscillante avec la tête de transducteur (26) le long de la trajectoire de déplacement de bande magnétique (33) pour nettoyer la tête de transducteur lorsque la bande magnétique (22) est sollicitée vers la trajectoire de déplacement de bande magnétique rétractée (35) ; et par
un actionneur (48) configuré pour faire osciller la tête de transducteur (26) de manière sensiblement transversale par rapport à la trajectoire de déplacement de bande magnétique (33) lorsque l'appareil de nettoyage de tête (34) du dispositif de nettoyage (28) est en mise en prise oscillante avec la tête de transducteur (26).

2. Lecteur de bande magnétique selon la revendication 1, dans lequel le support de bande magnétique (20, 24) est opérationnel pour déplacer la bande magnétique rétractée (22) sur la structure de déplacement de bande magnétique (30, 36) afin d'empêcher au moins l'une parmi l'usure du transducteur et la contamination du transducteur provoquée par le contact de la bande magnétique (22) qui se déplace contre la tête de transducteur (26).

3. Lecteur de bande magnétique selon la revendication 1, dans lequel le lecteur de bande magnétique est opérationnel pour A) recevoir un signal indiquant si la tête de transducteur (26) doit être nettoyée ou B) déterminer si la tête de transducteur doit être nettoyée et C) si le nettoyage n'est pas nécessaire, déplacer la bande magnétique au-delà de la tête de transducteur le long de ladite trajectoire de déplacement de bande magnétique rétractée pour empêcher au moins l'une parmi l'usure du transducteur et la contamination du transducteur provoquée par le contact de la bande magnétique (22) qui se déplace contre la tête de transducteur et D) si le nettoyage est nécessaire, provoquer lesdits mouvements oscillants de la tête de transducteur et de l'appareil de nettoyage de tête (34) afin de nettoyer la tête de transducteur.

4. Lecteur de bande magnétique selon la revendication 1, 2 ou 3, dans lequel la structure de déplacement de bande magnétique (30, 36) comprend une structure de support (30) supportée par le lecteur de bande magnétique (12) et ayant une surface de support externe (36) configurée pour mettre en prise et solliciter une bande magnétique (22).

5. Lecteur de bande magnétique selon la revendication 4, dans lequel l'appareil de nettoyage de tête (34) du dispositif de nettoyage de tête (28) est supporté sur la structure de support (30).

6. Lecteur de bande magnétique selon l'une quelconque des revendications précédentes, dans lequel l'appareil de nettoyage de tête du dispositif de nettoyage de tête (28) comprend une brosse de nettoyage (34) .

7. Lecteur de bande magnétique selon l'une quelconque des revendications précédentes, dans lequel la tête de transducteur (26) comprend une tête de lecture / écriture magnétique.

8. Procédé pour nettoyer un lecteur de bande magnétique linéaire (12), comprenant les étapes consistant à :
prévoir une bande magnétique (22) et un support de bande magnétique (20, 24) pour déplacer la bande magnétique (22) à l'intérieur du lecteur de bande magnétique (12), la bande magnétique étant supportée pour le mouvement sur la tête de transducteur (26) le long d'une trajectoire de déplacement de bande magnétique (33) ;
pousser la bande magnétique (22) à distance de la tête de transducteur (26) en faisant pivoter une structure de déplacement de bande magnétique (30, 36) en mise en prise avec la bande magnétique (22) pour rétracter la bande magnétique (22) dans une trajectoire de déplacement de bande magnétique rétractée (35) ;
déplacer un appareil de nettoyage de tête (34) d'un dispositif de nettoyage (28) en mise en prise avec la tête de transducteur (26) et provoquer le nettoyage de la tête de transducteur en faisant osciller l'appareil de nettoyage de tête le long de la direction de la trajectoire de déplacement de bande magnétique (33) et faire osciller la tête de transducteur (26) de manière sensiblement transversale par rapport à la trajectoire de déplacement de bande magnétique (33) pour transmettre le nettoyage à la tête de transducteur (26) .

9. Procédé selon la revendication 8, dans lequel la bande magnétique (22) comprend au moins une section de bande de nettoyage abrasive et comprenant en outre en combinaison avec l'étape consistant à pousser la bande magnétique (22) à distance de la tête de transducteur (26), l'étape consistant à déplacer la ou au moins une section de bande de nettoyage au-delà de la tête de transducteur (26) le long de ladite trajectoire rétractée pour empêcher au moins l'une parmi :
A) l'usure abrasive de la tête de transducteur (26) ; et
B) la contamination de la tête de transducteur (26) avec des débris déposés par la section de bande de nettoyage abrasive.

10. Procédé selon la revendication 8, dans lequel la bande magnétique (22) comprend au moins une section de bande de nettoyage abrasive et comprenant en outre A) l'étape consistant à recevoir un signal indiquant si la tête de transducteur (26) doit être nettoyée ou B) l'étape consistant à déterminer à l'intérieur dudit lecteur de bande magnétique, si la tête de transducteur doit être nettoyée et C) si la tête de transducteur doit être nettoyée, provoquer ledit mouvement oscillant de la tête de transducteur et de l'appareil de nettoyage de tête et D) si le nettoyage n'est pas nécessaire, déplacer la ou une dite section de bande de nettoyage abrasive au-delà de la tête de transducteur le long de ladite trajectoire de déplacement de bande magnétique rétractée.

11. Procédé selon la revendication 8, 9 ou 10, dans lequel l'appareil de nettoyage de tête du dispositif de nettoyage (28) comprend une brosse de nettoyage (34).
